# EUROPEAN PATENT APPLICATION

(11) **EP 4 734 526 A1**
(43) Date of publication of application: **29.04.2026**
(21) Application number: 24825293.4
(22) Date of filing: 20.06.2024
(51) Int. Cl.: H04N 21/2187

(54) **INTERFACE INTERACTION METHOD AND APPARATUS, DEVICE, AND STORAGE MEDIUM**

(30) Priority: 20.06.2023 CN 202310736950
(71) Applicant: Lemon Inc., Grand Cayman, KY1-1205 (KY); Beijing Zitiao Network Technology Co., Ltd., Beijing 100190 (CN)
(72) Inventor: LUO, Xuan, Beijing 100028 (CN); WANG, Yaozheng, Beijing 100028 (CN)
(74) Representative: Isarpatent
(86) International application number: PCT/CN2024/100333
(87) International publication number: WO 2024/260405

(57) **Abstract**

Embodiments of the disclosure relate to a method, an apparatus, a device, and a storage medium of interface interaction. The method provided herein includes: displaying a first preview interface of a live streaming room, live streaming content of the live streaming room being provided in the first preview interface with a first content parameter; displaying a second preview interface of the live streaming room in response to a display time of the preview interface reaching a threshold, the live streaming content of the live streaming room being provided in the second preview interface with a second content parameter different from the first content parameter; and displaying, based on a first predetermined operation in the second preview interface, a live streaming interface entering the live streaming room. Based on the above manner, the embodiments of the disclosure may guide the user into the live streaming room by changing the content parameter of the live streaming content provided in the preview interface, thereby facilitating the content sharing of the live streaming room.

## Description

This application claims priority to Chinese Patent Application No.: 202310736950. X, filed June 20, 2023, entitled "Method, Apparatus, Device, and Storage Medium of Interface Interaction", the entirety of which is incorporated herein by reference.

### FIELD

Example embodiments of the disclosure generally relate to the field of computers, and in particular, to a method, an apparatus, a device, and a computer-readable storage medium of interface interaction.

### BACKGROUND

With the development of computer technologies, the Internet has become an important source for people to obtain various contents. The live streaming technology that utilizes the Internet and the streaming media technology for content dissemination is increasingly prospering, and it has gradually become the mainstream expression mode of the Internet due to its integration of rich elements such as images, texts and sounds.

### SUMMARY

In a first aspect of the disclosure, a method of interface interaction is provided. The method includes: displaying a first preview interface of a live streaming room, live streaming content of the live streaming room being provided in the first preview interface with a first content parameter; displaying a second preview interface of the live streaming room in response to a display time of the preview interface reaching a threshold, the live streaming content of the live streaming room being provided in the second preview interface with a second content parameter different from the first content parameter; and displaying, based on a first predetermined operation in the second preview interface, a live streaming interface entering the live streaming room.

In a second aspect of the disclosure, an apparatus of interface interaction is provided. The apparatus includes a first display module, a second display module and a third display module. The first display module is configured to display a first preview interface of a live streaming room, and the live streaming content of the live streaming room is provided in the first preview interface with a first content parameter. The second display module is configured to display a second preview interface of the live streaming room in response to a display time of the preview interface reaching a threshold, the live streaming content of the live streaming room is provided in the second preview interface with a second content parameter, and the second content parameter is different from the first content parameter. The third display module is configured to display, based on a first predetermined operation in the second preview interface, a live streaming interface entering the live streaming room.

In a third aspect of the disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

**In** a fourth aspect of the disclosure, a computer-readable storage medium is provided. The computer-readable storage medium has a computer program stored thereon, and the computer program is executable by the processor to implement the method of the first aspect.

It should be understood that the content described in this content section is not intended to limit the key features or major features of the embodiments of the disclosure, nor is it intended to limit the scope of the disclosure. Other features of the disclosure will become readily understood from the following description.

### BRIEF DESCRIPTION OF DRAWINGS

The above and other features, advantages, and aspects of various embodiments of the disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments according to the disclosure may be implemented;
FIGS. 2A-2C illustrate example interfaces according to some embodiments of the disclosure;
FIG. 3 illustrates a flowchart of an example process of interface interaction according to some embodiments of the disclosure;
FIG. 4 illustrates a schematic structural block diagram of an apparatus for interface interaction according to some embodiments of the disclosure; and
FIG. 5 illustrates a block diagram of an electronic device capable of implementing various embodiments of the disclosure.

### DETAILED DESCRIPTION

Embodiments of the disclosure will be described in more detail below with reference to the accompanying drawings. While certain embodiments of the disclosure are shown in the accompanying drawings, it should be understood that the disclosure may be implemented in various forms, and should not be construed as being limited to the embodiments set forth herein, but rather, these embodiments are provided for a more thorough and complete understanding of the disclosure. It should be understood that the drawings and embodiments of the disclosure are for illustrative purposes only and are not intended to limit the scope of the disclosure.

It should be noted that the title of any section / subsection provided herein is not limiting. Various embodiments are described throughout and any type of embodiments may be included in any section / subsection. Furthermore, the embodiments described in any section / subsection may be combined in any manner with any other embodiment described in the same section / subsection and / or different sections / subsections.

In the description of the embodiments of the disclosure, the terms "including" and the like should be understood to mean open-ended inclusion, i.e., "including but not limited to". The term "based on" should be understood as "based at least in part on". The terms "an embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

Embodiments of the disclosure may relate to data of a user, acquisition and / or use of data, and the like. These aspects all follow the corresponding laws and regulations and related regulations. In the embodiments of the disclosure, all data collection, acquisition, treatment, processing, forwarding, use and the like are performed on the premise that the user knows and confirms. Accordingly, when implementing the embodiments of the disclosure, the type, the usage scope, the usage scenario, and the like of the data or information that may be involved should be notified to the user and obtain the authorization from the user in an appropriate manner according to the relevant laws and regulations. The specific notification and / or authorization manner may vary according to actual situations and application scenarios, and the scope of the disclosure is not limited in this respect.

According to the solutions in the present specification and the embodiments, for example, personal information processing is involved, processing may be performed on the premise of having a legal basis (for example, obtaining consent of a personal information subject, or necessary for performing a fulfillment contract), and processing may be performed only within a specified or agreed range. In the case that the user refuses personal information other than necessary information required by the basic function, the use of the basic function will not be affected.

In a live streaming scenario, some live streaming platforms may provide a live streaming preview interface for a live streaming room, so that a user may obtain content in the live streaming room without entering the live streaming room. However, in some scenarios, it is difficult for the user to perceive whether the user is currently on the preview interface or the live streaming interface, so that the user cannot perform the interaction in the live streaming room, thereby affecting the user's interaction experience.

Embodiments of the disclosure provide a solution of interface interaction. According to the solution, a first preview interface of a live streaming room may be displayed, and live streaming content of the live streaming room is provided in the first preview interface with a first content parameter. Further, a second preview interface of the live streaming room may be displayed in response to a display time of the preview interface reaching a threshold, wherein the live streaming content of the live streaming room is provided in the second preview interface with a second content parameter, and the second content parameter is different from the first content parameter. Correspondingly, the live streaming interface entering the live streaming room is displayed based on a first predetermined operation in the second preview interface.

Based on the above manner, the embodiments of the disclosure may guide the user into the live streaming room by changing the quality of the live streaming content provided in the preview interface, thereby facilitating the content sharing of the live streaming room.

Various example implementations of this solution are described in detail below in conjunction with the accompanying drawings.

### Example Environment

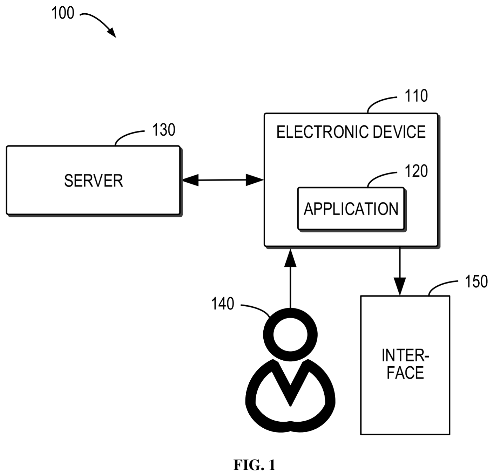

FIG. 1 illustrates a schematic diagram of an example environment 100 in which embodiments of the disclosure may be implemented. As shown in FIG. 1, the example environment 100 may include an electronic device 110.

In this example environment 100, the electronic device 110 may be run with an application 120 for providing and viewing live streaming. The application 120 may be any suitable type of application for providing and viewing live streaming, examples of which may include, but are not limited to: an online video application, and a live streaming application. An user 140 may interact with the application 120 via the electronic device 110 and / or its attachment device. The user 140 may, for example, a user providing live streaming content (also referred to as a streamer), and a user viewing the live streaming (also referred to as a viewer).

In the environment 100 of FIG. 1, if the application 120 is in an active state, the electronic device 110 may present a live streaming interface 150 through the application 120.

In some embodiments, the electronic device 110 communicates with the server 130 to enable provisioning of services to the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR / AR device, a personal communication system (PCS) device, a personal navigation device, a personal digital assistant (PDA), an audio / video player, a digital camera / camcorder, a positioning device, a television receiver, a radio broadcast receiver, an electronic book device, a gaming device, or any combination of the foregoing, including accessories and peripherals of these devices, or any combination thereof. In some embodiments, the electronic device 110 may also support any type of interface for a user (such as a "wearable" circuit, etc.).

The server 130 may be a standalone physical server, a distributed system or a server cluster composed of multiple physical servers, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include, for example, a computing system / server, such as a mainframe, an edge computing node, a computing device in a cloud environment, or the like. The server 130 may provide a background service for the applications 120 that support virtual scenes in the electronic device 110.

A communication connection may be established between the server 130 and the electronic device 110. The communication connection may be established in a wired manner or a wireless manner. The communication connection may include, but is not limited to, a Bluetooth connection, a mobile network connection, a Universal Serial Bus (USB) connection, a Wireless Fidelity (WiFi) connection, and the like, and the embodiments of the disclosure are not limited in this regard. In an embodiment of the disclosure, the server 130 and the electronic device 110 may implement signaling interaction through the communication connection between the server 130 and the electronic device 110.

It should be understood that the structures and functions of various elements in the environment 100 are described for illustrative purposes only and do not imply any limitation to the scope of the disclosure.

Some example embodiments of the disclosure will be described below with continued reference to the accompanying drawings.

### Example Interface

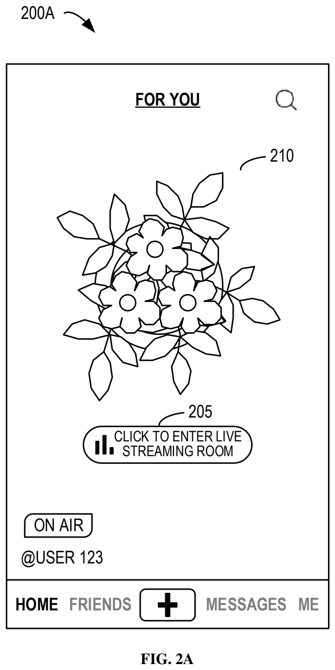

Example interfaces according to the disclosure will be described below in conjunction with FIGS. 2A-2C.

In some scenarios, when the user 140 switches different live streaming rooms in the information flow, it may not directly enter the live streaming room. Accordingly, the electronic device 110 may provide the user with a preview interface (also referred to as a first preview interface) of the browsed live streaming room.

FIG. 2A illustrates an example first preview interface 200A according to some embodiments of the disclosure. As shown in FIG. 2A, in the first preview interface 200A, the electronic device 110 may provide live streaming content 210 of the live streaming room. Such live streaming content 210 may include, for example, video content, image content, and / or audio content, and / or the like.

In some embodiments, the electronic device 110 may provide the live streaming content 210 in the first preview interface 200A with a first content parameter. Such a content parameter may indicate an image parameter of an image content portion and / or an audio parameter of the audio content portion of the live streaming content 210. In some scenarios, such content parameters may be used to characterize the playback quality of the provided live streaming content 210.

Taking image parameters as examples, different image parameters may correspond to, for example, different definitions, different display sizes, different resolutions, different degrees of occlusion, and / or other appropriate indicators for measuring the image quality.

Taking audio parameters as examples, different audio parameters may correspond to, for example, different sampling rates, different sampling bit depths, different numbers of sound channels, and / or other suitable indicators for measuring audio parameters.

In some scenarios, the first content parameter of the live streaming content provided in the first preview interface may be the same as a content parameter of the live streaming content obtained after the user enters the live streaming room. Alternatively, the first content parameter of the live streaming content provided in the first preview interface may be different from the content parameter of the live streaming content obtained after the user enters the live streaming room. For example, a definition of the live streaming video obtained by the user in the first preview interface may be lower than a definition of the live streaming video obtained in the live streaming interface.

In some embodiments, the electronic device 110 may also present a first guidance information 205 in the first preview interface 200A. The first guidance information 205 may be used to indicate that the user is currently on the preview interface of the live streaming room, and indicate that the user may enter the live streaming interface of the live streaming room through appropriate interaction. For example, the user may enter the live streaming interface (for example, the interface 200C described below) of the live streaming room by clicking the first guidance information 205, or by clicking other appropriate hot spot(s) in the interface 200A.

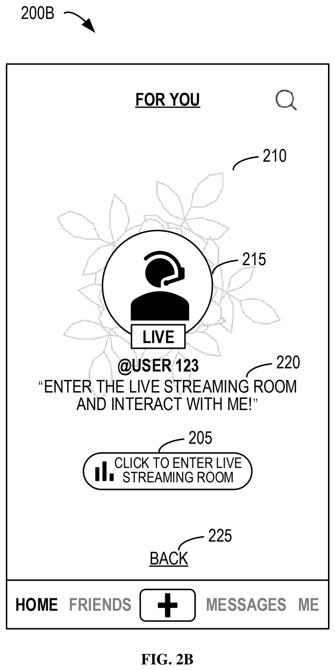

In some embodiments, if the first preview interface 200A is displayed for a predetermined duration, the electronic device 110 may display a second preview interface 200B as shown in FIG. 2B. As shown in FIG. 2B, unlike the first preview interface 200A, the second content parameter of the live streaming content 210 in the second preview interface 200B may be different from the first content parameter of the live streaming content 210 in the first preview interface 200A.

In some scenarios, the second content parameter may, for example, indicate that a presentation quality of the live streaming content in the second preview interface 200B is lower than in the first preview interface 200A.

Taking the live streaming content 210 including an image content portion as an example, the electronic device 110 may, for example, add a blur mask to the image content portion of the live streaming content 210 in the second preview interface 200B, so that a definition of the image content portion of the live streaming content 210 in the second preview interface 200B is different from in the first preview interface 200A. For example, a resolution of the image content portion in the second preview interface 200B may be lower.

As another example, the electronic device 110 may also display the image content portion of the live streaming content 210 in different display sizes (e.g., a smaller display size) in the second preview interface 200B, for example. Illustratively, the electronic device 110 may, for example, display the image content portion by using an avatar region of a live streaming party of the live streaming room instead of the entire content region in the first preview interface 200A.

As another example, the electronic device 110 may also, for example, change a resolution of the image content portion of the live streaming content 210. For example, the electronic device 110 may reduce the resolution of the image content portion.

As still another example, the electronic device 110 may also change a degree of occlusion of the live streaming content 210, for example. Taking FIG. 2B as an example, the electronic device 110 may, for example, utilize more elements (for example, an identification information 215 and a second guidance information 230) to block an image portion of the live streaming content 210.

Taking the live streaming content 210 including an audio content portion as an example, the electronic device 110 may, for example, change an audio parameter of the audio content portion. For example, the electronic device 110 may change a sampling rate, a sampling depth, or a number of sound channels of the audio content portion.

Through the above manner, the embodiments of the disclosure may promote the user to perceive that the user is currently on the live streaming preview interface through the content parameter change of the live streaming content.

In some embodiments, the electronic device 110 may also provide second guidance information 220 in the second preview interface 200B, for example. Such second guidance information 220 may include, for example, any suitable content for guiding a user to enter a live streaming room, such as text content, image content, audio content, video content, and the like.

In some embodiments, such second guidance information 220 may include content configured by a live streaming party of the live streaming room. For example, the live streaming party may input a text, an image, an audio or a video for guiding the user to enter the live streaming room during an initiation phase of the live streaming.

As another example, such second guidance information 220 may also include, for example, predetermined guidance information. For example, when the live streaming party does not configure the guidance information, the electronic device 110 may select, from a set of predetermined guidance information, one piece of guidance information for displaying.

In some embodiments, the first guidance information 205 may, for example, continue to be displayed in the second preview interface 200B, and its display style and / or display position may be unchanged or adaptively changed, for example.

In some embodiments, the electronic device 110 may also present the identification information 215 of the live streaming party of the live streaming room in the second preview interface 200B. Such identification information 215 may include, for example, an image identification (e.g., an avatar) and / or a text identification (e.g., a user name) of the live streaming party.

Different from the first preview interface 200A, such identification information 215 may be, for example, not presented in the first preview interface 200A. Alternatively, the electronic device 110 may display the identification information 215 in the second preview interface 200B at a larger size.

Illustratively, the identification information 215 may also have a dynamic style change to indicate a live streaming state of the live streaming party. For example, the avatar of the live streaming party may have a breathing light pattern to indicate the live streaming state of the live streaming party.

By providing the identification information, the embodiments of the disclosure may further facilitate the user to determine whether the current live streaming room is a live streaming room of interest to the user, thereby facilitating the user to more efficiently determine whether to enter the live streaming room.

In some embodiments, the electronic device 110 may also provide a return entry 225 in the second preview interface 200B. After receiving a trigger operation for the return entry 225, the electronic device 110 may switch back to displaying the first preview interface 200A.

In some embodiments, the electronic device 110 may also support the user to switch back to the first preview interface 200A through other appropriate interaction manners. Illustratively, when detecting a sliding operation of the user in a predetermined direction in the appropriate region of the second preview interface 200B, the electronic device 110 may switch back to the first preview interface 200A.

In this way, the embodiments of the disclosure may support the user to continue obtaining the live streaming content through the preview interface while ensuring presentation of the live streaming content.

In some embodiments, after detecting the predetermined operation of the user in the second preview interface 200B, the electronic device 110 may present the live streaming interface 200C entering the live streaming room. It should be understood that such a predetermined operation may include any suitable operation, for example, a click operation, a sliding operation, and the like in an appropriate region in the second preview interface 200B.

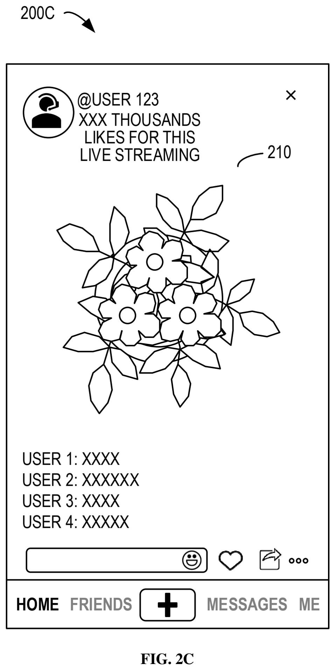

FIG. 2C illustrates an example live streaming interface 200C according to some embodiments of the disclosure. As shown in FIG. 2C, with respect to the preview interface (for example, the first preview interface 200A and the second preview interface 200B), the live streaming interface 200C corresponds to an interface after entering the live streaming room, which may, for example, provide richer information (for example, comment information, like information, etc.) associated with the live streaming room, or the live streaming interface 200C may also provide a set of interaction controls (for example, a comment control, a gift control, etc.) that interact with the live streaming room.

In some embodiments, if the user selects to exit the live streaming interface 200C, the electronic device 110 may, for example, return to displaying the first preview interface 200A of the live streaming room.

### Example Process

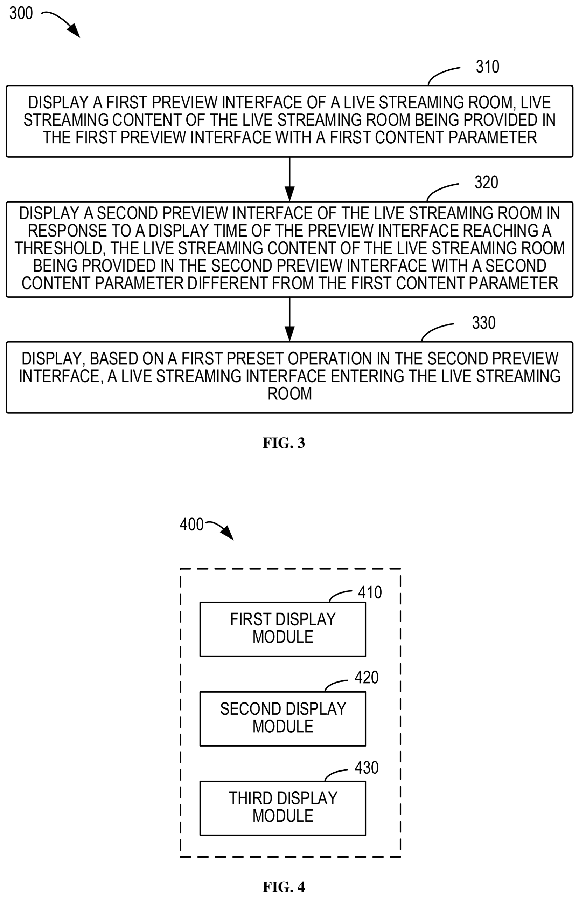

FIG. 3 illustrates a flowchart of an example process 300 for interface interaction according to some embodiments of the disclosure. A process 300 may be implemented at the electronic device 110. The process 300 is described below with reference to FIG. 1.

As shown in FIG. 3, at block 310, the electronic device 110 displays a first preview interface of a live streaming room, and live streaming content of the live streaming room is provided in the first preview interface with a first content parameter.

At block 320, the electronic device 110 displays a second preview interface of the live streaming room in response to a display time of the preview interface reaching a threshold, the live streaming content of the live streaming room is provided in the second preview interface with a second content parameter different from the first content parameter.

At block 330, the electronic device 110 displays, based on a first predetermined operation in the second preview interface, a live streaming interface entering the live streaming room.

In some embodiments, the live streaming content includes an image content portion, the image content portion corresponds to a first image parameter in the first preview interface, the image content portion corresponds to a second image parameter in the second preview interface, and the first image parameter is higher than the second image parameter.

In some embodiments, the first image parameter and / or the second image parameter indicate at least one of the following: a definition of the image content portion, a display size of the image content portion, a resolution of the image content portion, and a degree of occlusion of the image content portion.

In some embodiments, the live streaming content includes an audio content portion, the audio content portion corresponds to a first audio parameter in the first preview interface, the audio content portion corresponds to a second audio parameter in the second preview interface, and the first audio parameter is higher than the second audio parameter.

In some embodiments, the second preview interface further displays guidance information, and the guidance information includes guidance information configured by a live streaming party of the live streaming room and / or predetermined guidance information.

In some embodiments, the second preview interface further displays identification information of a live streaming party of the live streaming room, and the identification information includes at least an image identifier.

In some embodiments, the identification information is not displayed in the first preview interface; or the identification information has a smaller display size in the first preview interface.

In some embodiments, the process 300 further includes: displaying the first preview interface of the live streaming room based on a second predetermined operation in the second preview interface.

In some embodiments, the process 300 further includes: displaying a return entry in the second preview interface; and receiving a trigger operation for the return entry as the second predetermined operation.

In some embodiments, the process 300 further includes: displaying the live streaming interface entering the live streaming room based on a third predetermined operation in the first preview interface.

### Example Apparatus and Device

Embodiments of the disclosure also provide a corresponding apparatus for implementing the above method or process. FIG. 4 is a schematic structural block diagram of an apparatus 400 of interface interaction according to some embodiments of the disclosure. The apparatus 400 may be implemented or included in the electronic device 110. Various modules / components in the apparatus 400 may be implemented by hardware, software, firmware, or any combination thereof.

The apparatus 400 includes a first display module 410 configured to display a first preview interface of a live streaming room, live streaming content of the live streaming room being provided in the first preview interface with a first content parameter; a second display module 420 configured to display a second preview interface of the live streaming room in response to a display time of the preview interface reaching a threshold, the live streaming content of the live streaming room being provided in the second preview interface with a second content parameter different from the first content parameter; and a third display module 430 configured to display, based on a first predetermined operation in the second preview interface, a live streaming interface entering the live streaming room.

**In** some embodiments, the live streaming content includes an image content portion, the image content portion corresponds to a first image parameter in the first preview interface, the image content portion corresponds to a second image parameter in the second preview interface, and the first image parameter is higher than the second image parameter.

In some embodiments, the first image parameter and / or the second image parameter indicate at least one of the following: a definition of the image content portion, a display size of the image content portion, a resolution of the image content portion, and a degree of occlusion of the image content portion.

In some embodiments, the live streaming content includes an audio content portion, the audio content portion corresponds to a first audio parameter in the first preview interface, the audio content portion corresponds to a second audio parameter in the second preview interface, and the first audio parameter is higher than the second audio parameter.

In some embodiments, the second preview interface further displays guidance information, and the guidance information includes guidance information configured by a live streaming party of the live streaming room and / or predetermined guidance information.

In some embodiments, the second preview interface further displays identification information of a live streaming party of the live streaming room, and the identification information includes at least an image identifier.

In some embodiments, the identification information is not displayed in the first preview interface; or the identification information has a smaller display size in the first preview interface.

In some embodiments, the first display module 410 is further configured to: display the first preview interface of the live streaming room based on a second predetermined operation in the second preview interface.

**In** some embodiments, the first display module 410 is further configured to: display a return entry in the second preview interface; and receive a trigger operation for the return entry as the second predetermined operation.

**In** some embodiments, the third display module 430 is further configured to: display the live streaming interface entering the live streaming room based on a third predetermined operation in the first preview interface.

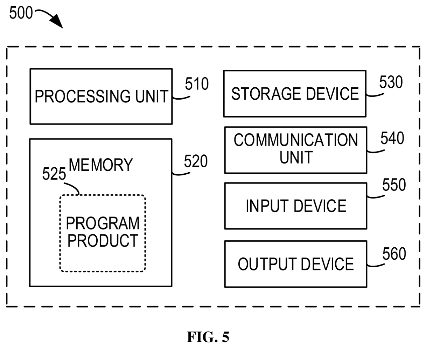

FIG. 5 illustrates a block diagram of an electronic device 500 in which one or more embodiments of the disclosure may be implemented. It should be understood that the electronic device 500 illustrated in FIG. 5 is merely illustrative and should not constitute any limitation on the functionality and scope of the embodiments described herein. The electronic device 500 shown in FIG. 5 may be configured to implement the electronic device 110 in FIG. 1.

As shown in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In a multiprocessor system, a plurality of processing units executes computer-executable instructions in parallel to improve the parallel processing capability of the electronic device 500.

Electronic device 500 generally includes a plurality of computer storage media. Such media may be any available media that is accessible by the electronic device 500, including, but not limited to, volatile and non-volatile media, removable and non-removable media. The memory 520 may be a volatile memory (e.g., a register, a cache, a random access memory (RAM)), a non-volatile memory (e.g., a read-only memory (ROM), an electrically erasable programmable read-only memory (EEPROM), a flash memory), or some combination thereof. The storage device 530 may be a removable or non-removable medium and may include a machine-readable medium, such as a flash drive, magnetic disk, or any other medium, which may be capable of storing information and / or data (e.g., training data for training) and may be accessed within the electronic device 500.

The electronic device 500 may further include additional removable / non-removable, volatile / non-volatile storage media. Although not shown in FIG. 5, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 520 may include a computer program product 525 having one or more program modules configured to perform various methods or actions of various embodiments of the disclosure.

The communication unit 540 is configured to communicate with another electronic device through a communication medium. Additionally, the functionality of components of the electronic device 500 may be implemented in a single computing cluster or multiple computing machines capable of communicating through a communication connection. Thus, the electronic device 500 may operate in a networked environment using logical connections with one or more other servers, a network personal computer (PC), or another network node.

The input device 550 may be one or more input devices, such as a mouse, a keyboard, a trackball, or the like. The output device 560 may be one or more output devices, such as a display, a speaker, a printer, or the like. The electronic device 500 may also communicate with one or more external devices (not shown) through the communication unit 540 as needed, the external device such as a storage device, a display device, etc., communicates with one or more devices that enable the user to interact with the electronic device 500, or communicates with any device (e.g., a network card, a modem, etc.) that enables the electronic device 500 to communicate with one or more other electronic devices. Such communication may be performed via an input / output (I/O) interface (not shown).

According to example implementations of the disclosure, there is provided a computer-readable storage medium having computer-executable instructions stored thereon, wherein the computer-executable instructions are executed by a processor to implement the method described above. According to example implementations of the disclosure, a computer program product is further provided, the computer program product being tangibly stored on a non-transitory computer-readable medium and including computer-executable instructions, and the computer-executable instructions being executed by the processor to implement the method described above.

Aspects of the disclosure are described herein with reference to flowcharts and / or block diagrams of a method, an apparatus, a device, and a computer program product implemented in accordance with the disclosure. It should be understood that each block of the flowchart and / or block diagram, and combinations of blocks in the flowchart(s) and / or block diagram(s), may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions / acts specified in one or more blocks in the flowchart(s) and / or block diagram(s). These computer-readable program instructions may also be stored in a computer-readable storage medium that cause the computer, programmable data processing apparatus, and / or other devices to function in a particular manner, such that the computer-readable medium storing instructions includes an article of manufacture including instructions to implement aspects of the functions / acts specified in one or more blocks in the flowchart(s) and / or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on the computer, other programmable data processing apparatus, or other apparatus implement the functions / acts specified in one or more blocks in the flowchart(s) and / or block diagram(s).

The flowchart and block diagrams in the figures show an architecture, functionality, and operation that may be possibly implemented by a system, a method, and a computer program product according to various implementations of the disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagram(s) and / or flowchart(s), as well as combinations of blocks in the block diagram(s) and / or flowchart(s), may be implemented with a dedicated hardware-based system that performs the specified functions or actions, or may be implemented in a combination of dedicated hardware and computer instructions.

Various implementations of the disclosure have been described above, which are illustrative, not exhaustive, and are not limited to the implementations disclosed. Many modifications and variations will be apparent to those of ordinary skill in the art without departing from the scope and spirit of various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method of interface interaction, comprising:
displaying a first preview interface of a live streaming room, live streaming content of the live streaming room being provided in the first preview interface with a first content parameter;
displaying a second preview interface of the live streaming room in response to a display time of the preview interface reaching a threshold, the live streaming content of the live streaming room being provided in the second preview interface with a second content parameter different from the first content parameter; and
displaying, based on a first predetermined operation in the second preview interface, a live streaming interface entering the live streaming room.

2. The method of claim 1, wherein the live streaming content comprises an image content portion, the image content portion corresponding to a first image parameter in the first preview interface, the image content portion corresponding to a second image parameter in the second preview interface, and the first image parameter being different from the second image parameter.

3. The method of claim 2, wherein the first image parameter and / or the second image parameter indicate at least one of the following:
a definition of the image content portion,
a display size of the image content portion,
a resolution of the image content portion,
a degree of occlusion of the image content portion.

4. The method of claim 1, wherein the live streaming content comprises an audio content portion, the audio content portion corresponding to a first audio parameter in the first preview interface, the audio content portion corresponding to a second audio parameter in the second preview interface, and the first audio parameter being different than the second audio parameter.

5. The method of claim 1, wherein the second preview interface further displays guidance information, and the guidance information comprises guidance information configured by a live streaminging party of the live streaminging room and / or predetermined guidance information.

6. The method of claim 1, wherein the second preview interface further displays identification information of a live streaming party of the live streaming room, and the identification information comprises at least an image identifier.

7. The method of claim 6, wherein:
the identification information is not displayed in the first preview interface; or
the identification information has a smaller display size in the first preview interface.

8. The method of claim 1, further comprising:
displaying the first preview interface of the live streaming room based on a second predetermined operation in the second preview interface.

9. The method of claim 6, further comprising:
displaying a return entry in the second preview interface; and
receiving a trigger operation for the return entry as the second predetermined operation.

10. The method of claim 1, further comprising:
displaying the live streaming interface entering the live streaming room based on a third predetermined operation in the first preview interface.

11. An apparatus of interface interaction, comprising:
a first display module, configured to display a first preview interface of a live streaming room, live streaming content of the live streaming room being provided in the first preview interface with a first content parameter;
a second display module, configured to display a second preview interface of the live streaming room in response to a display time of the preview interface reaching a threshold, the live streaming content of the live streaming room being provided in the second preview interface with a second content parameter different from the first content parameter; and
a third display module, configured to display, based on a first predetermined operation in the second preview interface, a live streaming interface entering the live streaming room.

12. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 10.

13. A computer-readable storage medium having stored thereon a computer program executable by a processor to implement the method of any of claims 1 to 10.
